# EUROPEAN PATENT SPECIFICATION

(11) **EP 1 536 578 B1**
(45) Date of publication and mention of the grant of the patent: **14.03.2007**
(21) Application number: 04027100.9
(22) Date of filing: 15.11.2004
(51) Int. Cl.: H04B 10/135

(54) **Differential polarization shift-keying optical transmission system**
Optisches Übertragungssystem mit differenzieller Polarisationsumtastung
Système de transmission optique utilisant une déplacement de polarisation différentielle

(30) Priority: 25.11.2003 KR 2003084041
(43) Date of publication of application: 01.06.2005
(73) Proprietor: SAMSUNG ELECTRONICS CO., LTD., Suwon-si, Gyeonggi-do (KR)
(72) Inventor: Kim, Hoon, c/o Samsung Electronics Co., Ltd., Suwon-si Gyeonggi-do (KR); Hwang, Seong-Taek, c/o Samsung Elect. Co., Ltd., Suwon-si Gyeonggi-do (KR)
(74) Representative: Grünecker, Kinkeldey, Stockmair & Schwanhäusser Anwaltssozietät

(56) References cited:
- EP-A- 0 964 538
- NISHIZAWA H ET AL: "10-GB/S OPTICAL DPSK PACKET RECEIVER PROOF AGAINST LARGE POWER FLUCTUATIONS" IEEE PHOTONICS TECHNOLOGY LETTERS, IEEE INC. NEW YORK, US, vol. 11, no. 6, June 1999 (1999-06), pages 733-735, XP000835441 ISSN: 1041-1135
- ROHDE M ET AL: "Robustness of DPSK direct detection transmission format in standard fibre WDM systems" ELECTRONICS LETTERS, IEE STEVENAGE, GB, vol. 36, no. 17, 17 August 2000 (2000-08-17), pages 1483-1484, XP006015582 ISSN: 0013-5194
- KIM H ET AL: "Polarisation-mode dispersion impairments in direct-detection differential phase-shift-keying systems" ELECTRONICS LETTERS, IEE STEVENAGE, GB, vol. 38, no. 18, 29 August 2002 (2002-08-29), pages 1047-1048, XP006018821 ISSN: 0013-5194
- BENEDETTO S ET AL: "DIRECT DETECTION OF OPTICAL DIGITAL TRANSMISSION BASED ON POLARIZATION SHIFT KEYING MODULATION" IEEE JOURNAL ON SELECTED AREAS IN COMMUNICATIONS, IEEE INC. NEW YORK, US, vol. 13, no. 3, 1 April 1995 (1995-04-01), pages 531-542, XP000497889 ISSN: 0733-8716
- LEPLEY J J ET AL: "Excess penalty impairments of polarisation shift keying transmission format in presence of polarisation mode dispersion" ELECTRONICS LETTERS, IEE STEVENAGE, GB, vol. 36, no. 8, 13 April 2000 (2000-04-13), pages 736-737, XP006015106 ISSN: 0013-5194

## Description

The present invention relates to an optical transmission system, and more particularly to a polarization shift-keying optical transmission system using polarization-modulated optical signals.

As generally known in the art, a polarization shift-keying optical transmission system has a receiver sensitivity which is about 3dB better than that of a conventional OOK (on-off keying) optical transmission system. It is also less affected by the Kerr nonlinear effect of optical fibers, since its signal intensity is constant regardless of a bit pattern. These advantages are useful in extending the transmission length of a long-distance optical transmission system or in securing a margin of the optical transmission system.

U.S. Patent No. 5,253,309 to Moshe Nazarathy et al., entitled "OPTICAL DISTRIBUTION OF ANALOG AND DIGITAL SIGNALS USING OPTICAL MODULATORS WITH COMPLEMENTARY OUTPUTS," discloses a polarization shift-keying optical transmission system. In a transmitter unit of the system, a polarization modulator transforms a CW (continuous wave) optical signal into an optical signal which has two polarization modes (these modes are perpendicular to each other) according to an inputted electrical signal (TE-TM mode transformation). After being subject to such polarization modulation, the optical signal is transmitted via an optical fiber and is inputted to a receiver unit. The receiver unit is composed of a polarization controller, a PBS (polarization beam splitter), and a balanced receiver. The polarization controller is necessary for dividing an optical signal, which is incident on the receiver unit, into '1' bits and '0' bits and then transferring them to both arms of the PBS. The polarization controller generally needs active control, because an optical signal, which is inputted to the receiver unit, changes its polarization state as time elapses. The PBS is adapted to split an inputted optical signal into two components according to polarization state of the signal. In the receiver unit, a '1' bit and a '0' bit have polarization modes which are perpendicular to each other. Accordingly, the '1' bit and the '0' bit are split by the PBS and transferred to corresponding arms. The balanced receiver acts to receive and increase or decrease the '1' bits and the '0' bits, which have been classified. After passing through the balanced receiver, any detected electrical signal is determined to be identical with that which has been sent from the transmitter unit.

Problematically, however, the above-described polarization shift-keying optical transmission system has a complicated receiver unit. Specifically, its polarization controller is generally slow (in the case of a liquid crystal) or demands high voltage for operation (in the case of a LiNbO₃ type). In addition, since the polarization controller needs active control, the performance of a receiver unit may deteriorate according to the level of accuracy of the control.

EP-A-0 964 538 discloses an optical transmitter and optical transmission system using polarization modulation. An optical transmission system is configured of a light source, an intensity modulator, a polarization modulator and a polarization state control circuit. The polarization state control circuit is configured of an exclusive-OR circuit and a 1-bit delay circuit.

Nishizawa H et al: "10-GB/S Optical DPSK Packet Receiver Proof Against Large Power Fluctuations" IEEE Photonics Technology Letters, IEEE Inc. New York, US, vol. 11, no. 6, June 1999, pages 733-735 discloses an optical differential phase-shift keying direct detection with balanced receivers using a phase modulation system.

Rohde M et al: "Robustness of DPSK direct detection transmission format in standard fiber WDM systems" Electronics Letters, IEE Stevenage, GB, vol. 36, no. 17, 17 August 2000, pages 1483-1484 discloses aspects of DPSK direct detection transmission format in standard fiber WDM systems.

The present invention has been made to solve the above-mentioned problems occurring in the prior art.

It is the object of the present invention to provide a polarization shift-keying optical transmission system capable of guaranteeing simple construction and stability of its receiver unit.

This object is solved by the subject matter of the independent claims.

Preferred embodiments are defined by the dependent claims.

In order to accomplish this object, there is provided a differential polarization shift-keying optical transmission system comprising a transmitter unit adapted to precode inputted data to form a precoded signal, and to use the precoded signal to generate and output a polarization-modulated optical signal. The system further includes a receiver unit connected with the transmitter unit via an optical fiber for optical transmission. According to a preferred embodiment of the present invention, the receiver unit includes a 1-bit delay interferometer adapted to split the optical signal from the transmitter unit into first and second split optical signals, generate a delayed optical signal by causing the second split optical signal to be delayed 1 bit, generate a phase-inverted optical signal by inverting the phase of a part of the first split optical signal, generate a constructive-interferential optical signal by causing a part of the delayed optical signal to interfere with another part of the first split optical signal, and generate a destructive-interferential optical signal by causing another part of the delayed optical signal to interfere with the phase-inverted optical signal; and a balanced receiver adapted to output a differential signal between the constructive-interferential optical signal and the destructive-interferential optical signal.

The above features and advantages of the present invention will be more apparent from the following detailed description taken in conjunction with the accompanying drawings, in which:
FIG 1 shows the construction of an NRZ differential polarization shift-keying optical transmission system according to a first preferred embodiment of the present invention;
FIG 2 shows the construction of a precoder shown in FIG 1;
FIG 3 shows respective signals according to their position within a transmitter unit shown in FIG 1;
FIG 4 shows the construction of a 1-bit delay interferometer shown in FIG 1;
FIG 5 shows respective signals according to their position within a receiver unit shown in FIG 1;
FIG 6 shows the construction of an RZ differential polarization shift-keying optical transmission system according to a second preferred embodiment of the present invention; and
FIG 7 shows the construction of an RZ differential polarization shift-keying optical transmission system according to a third preferred embodiment of the present invention.

Preferred embodiments of the present invention are described with reference to the accompanying drawings. In the following description of the present invention, details of known functions and configurations incorporated herein are omitted for clarity of presentation.

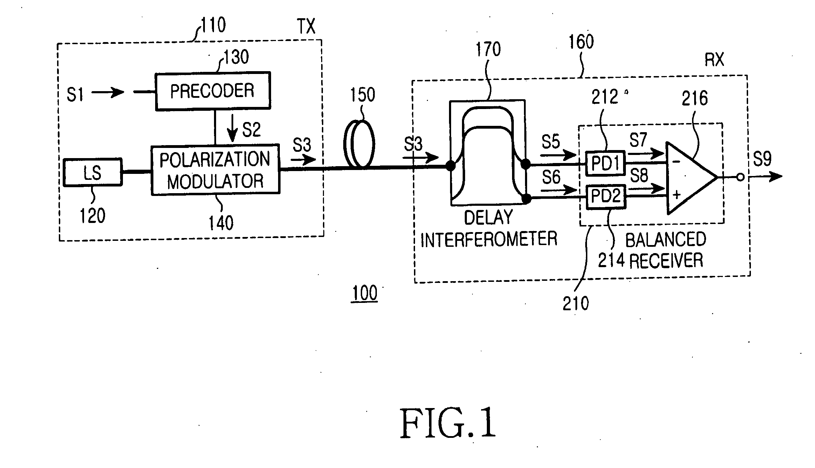

FIG 1 shows, by way of illustrative and non-limitative example, the construction of an NRZ (non-return-to-zero) differential polarization shift-keying optical transmission system according to a first preferred embodiment of the present invention. The optical transmission system 100 includes a transmitter unit (TX) 110 and a receiver unit (RX) 160, which are connected to each other by an optical fiber 150. The transmitter unit 110 includes a light source (LS) 120, a precoder 130, and a polarization modulator 140. The receiver unit 160 includes a 1-bit delay interferometer 170 and a balanced receiver 210. The balanced receiver 210 includes first and second optical detectors 212, 214 and a differential amplifier 216. Each of the first and second optical detectors 212, 214 includes a photodiode (PD), which is a conventional photoelectric element. The differential amplifier 216 includes an output terminal, a (-) input terminal connected with the first optical detector 212, and a (+) input terminal connected with the second optical detector 214.

The light source 120 of the transmitter unit 110 outputs CW-mode light and includes a conventional CW laser diode.

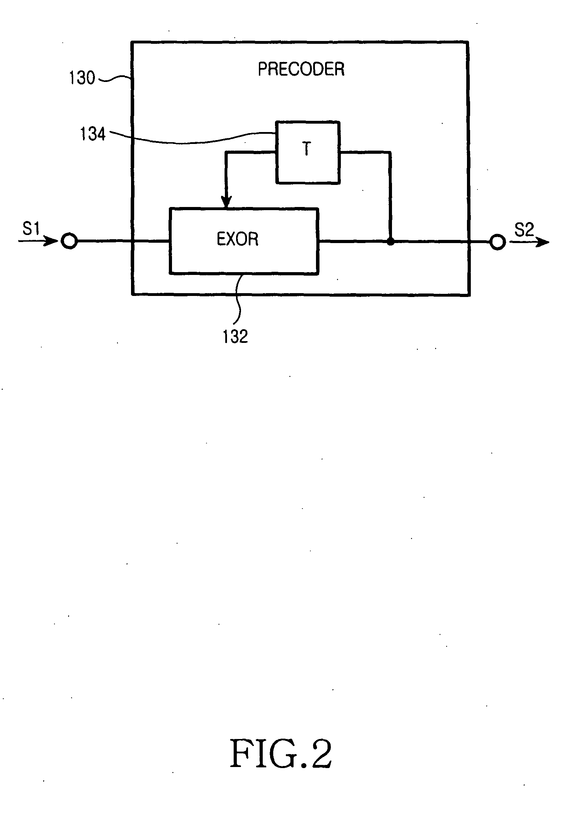

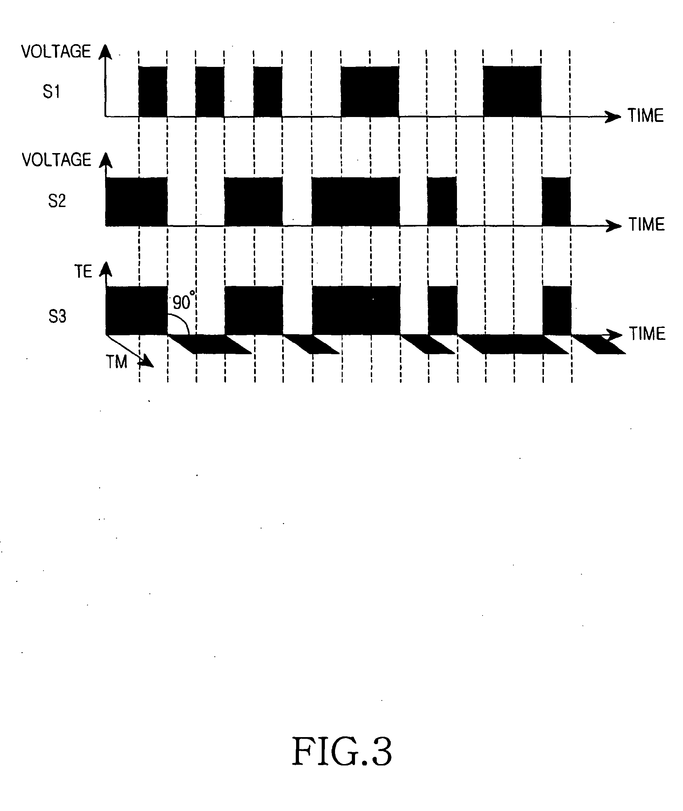

The precoder 130, as shown in FIG 2, is adapted to precode inputted data S1, shown in FIG 3, to generate a precoded electrical signal S2 and includes a 1-bit delay line 134 and an EXOR (exclusive OR) circuit 132. Although a specific construction of the precoder 130 is given as an example, the precoder 130 may be constructed in various ways as long as it performs a precoding function. As another example, the precoder may be composed of a binary counter and a delay line. The binary counter counts inputted clock signals when inputted data has a predetermined value ('0' or '1') and outputs the result. The data S1 is given as, for example, '101010011000110'.

The polarization modulator 140 uses the precoded electrical signal S2 to modulate, through polarization modulation, the light from the light source 120 and outputs a polarization-modulated optical signal S3. After being subject to the polarization modulation, each '1' bit and '0' bit have polarization modes (TE and TM modes) which are perpendicular to each other (that is, the angle between them is 90°). Regarding the polarization-modulated optical signal S3, a '1' bit from the precoded electrical signal S2 has a TE mode component only and a '0' bit from the same has a TM mode component only.

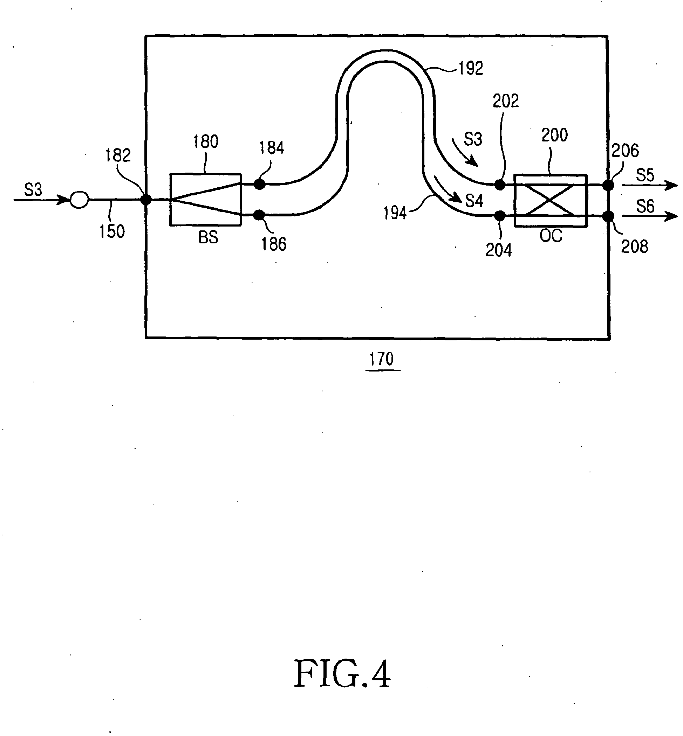

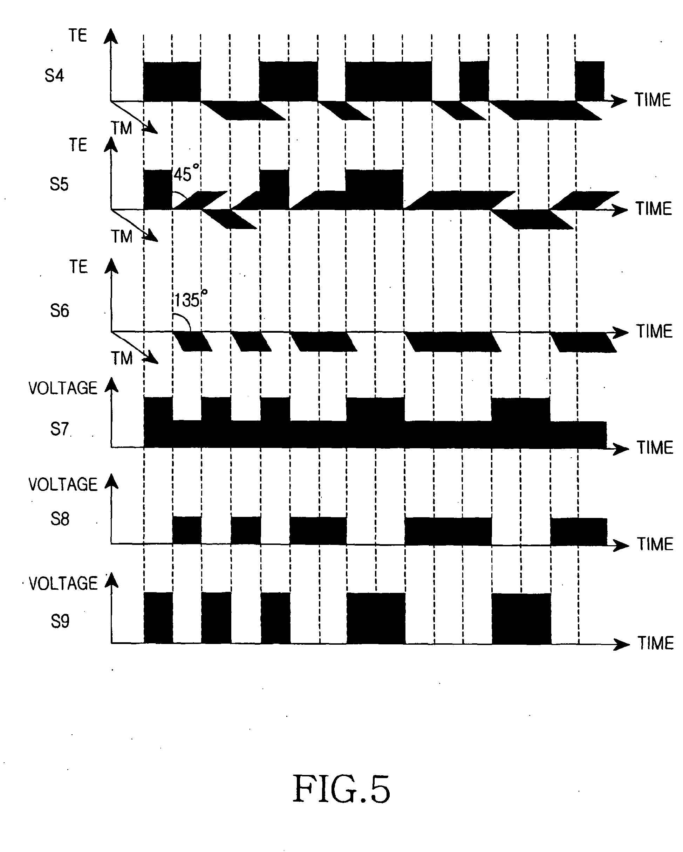

FIG 4 shows the construction of the 1-bit delay interferometer 170 and FIG 5 shows respective signals S4-S9 according to their position within the receiver unit 160. The receiver unit 160 is described below with reference to FIGs. 1, 4, and 5.

The 1-bit delay interferometer 170 includes a beam splitter (BS) 180, first and second delay lines 192 and 194, and an optical coupler (OC) 200.

The beam splitter 180 has a first input port 182 and first and second output ports 184, 186. The first input port 182 is connected with the optical fiber 150. The beam splitter 180 splits the polarization-modulated optical signal S3, which is inputted to the first input port 182, into first and second split optical signals through intensity split. The first and second split optical signals are outputted via the first and second output ports 184, 186, respectively.

The optical coupler 200 has first and second input ports 202, 204 and first and second output ports 206, 208. The first input port 202 of the optical coupler 200 is connected with the first output port 184 of the beam splitter 180 via the first delay line 192 and the second input port 204 of the coupler is connected with the second output port 186 of the beam splitter 180 via the second delay line 194. The second delay line 194 is longer than the first delay line 192 by a length which corresponds to 1 bit. As a result, after passing through the second delay line 194, the second split optical signal (hereinafter, referred to as a "delayed optical signal") S4 is delayed by 1 bit more than the first split optical signal S3, which has passed through the first delay line 192.

The optical coupler 200 inverts the phase of a part of the first split optical signal S3, which is inputted to the second input port 202 of the coupler, to generate a phase-inverted optical signal. The optical coupler 200 causes a part of the delayed optical signal S4 to interfere with another part of the first split optical signal S3 and generate a constructive-interferential optical signal S5, which is outputted via the first output port 206 of the optical coupler. In the case of the constructive-interferential optical signal S5, on one hand, bits which have the same polarization and the same phase relative to the first split optical signal S3 and the delayed optical signal S4 are outputted as constructive-interferential bits and, on the other hand, bits which have orthogonal polarization but the same phase are outputted as bits whose polarization is slanted 45° relative to a TE mode axis.

The optical coupler 200 causes another part of the delayed optical signal S4 to interfere with the phase-inverted optical signal and generate a destructive-interferential optical signal S6, which is outputted via the second output port 208 of the coupler. In the case of the destructive-interferential optical signal S6, on one hand, bits which have the same polarization and the same phase relative to the first split optical signal S3 and the delayed optical signal S4 undergo destructive interference with one another and are outputted as extinct bits ('0' bits) and, on the other hand, bits which have orthogonal polarization but the same phase are outputted as bits whose polarization is slanted 135° relative to a TE mode axis.

The first optical detector 212 is connected with the first output port 206 of the optical coupler 200 and is adapted to output a first detection signal S7, which is obtained through photoelectric conversion of the constructive-interferential optical signal S5 inputted from the first output port of the coupler.

The second optical detector 214 is connected with the second output port 208 of the optical coupler 200 and is adapted to output a second detection signal S8, which is obtained through photoelectric conversion of the destructive-interferential optical signal S6 inputted from the second output port of the coupler.

The differential amplifier 216 outputs, via the output terminal, a differential signal S9 corresponding to a difference between the first and second detection signals S7, S8, which are inputted to the (-) and (+) input terminals, respectively. A comparison of FIGs. 3 and 5 shoes that the differential signal S9 outputted from the receiver 160 is equal to the data S1 inputted to the transmitter 110.

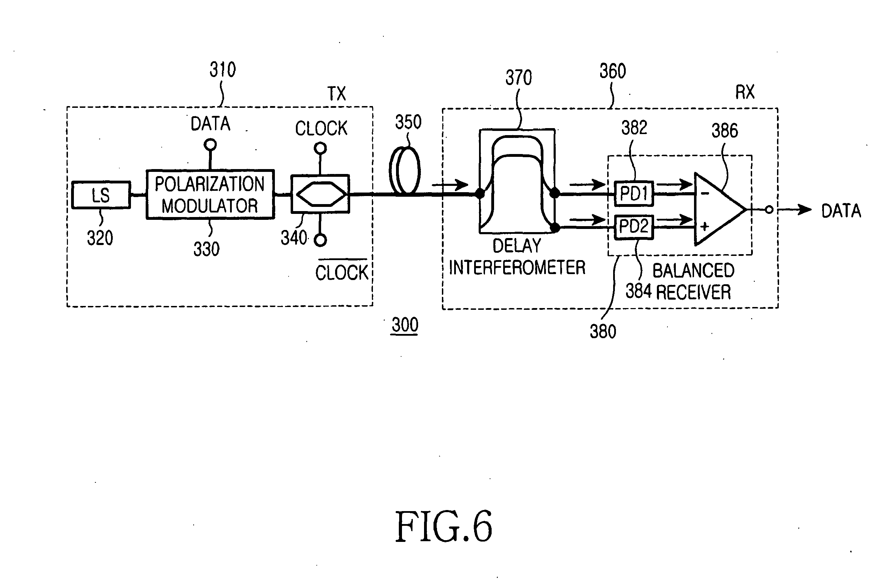

FIG 6 shows one example of a construction of an RZ (return-to-zero) differential polarization shift-keying optical transmission system according to a second preferred embodiment of the present invention. The optical transmission system 300 is identical to the optical transmission system 100 shown in FIG 1, except that the precoder 130 is removed and an auxiliary optical modulator 340 is added for RZ coding. Therefore, repeated descriptions of the same components, except the auxiliary optical modulator 340, are omitted.

The optical transmission system 300 includes a transmitter unit 310 and a receiver unit 360, which are connected to each other by an optical fiber 350. The transmitter unit 310 includes a light source 320; a polarization modulator 330 adapted to receive, as input, data and CW-mode light from the light source; and the auxiliary optical modulator 340. The receiver unit 360 includes a 1-bit delay interferometer 370 and a balanced receiver 380. The balanced receiver 380 has first and second optical detectors 382, 384 and a differential amplifier 3 86.

The auxiliary optical modulator 340 generates an optical pulse stream, which corresponds to a clock frequency, using an inputted clock signal or a half-frequency signal of a clock. A polarization-modulated optical signal, which is inputted from the polarization modulator 330, is loaded into the optical pulse stream and is transmitted via the optical fiber 350.

In general, an RZ mode has a reception sensitivity which is improved by about 2 dB, compared with an NRZ mode, and is advantageous in that the transmission length of the optical transmission system 300 can be extended or a margin of the optical transmission system 300 can be assured.

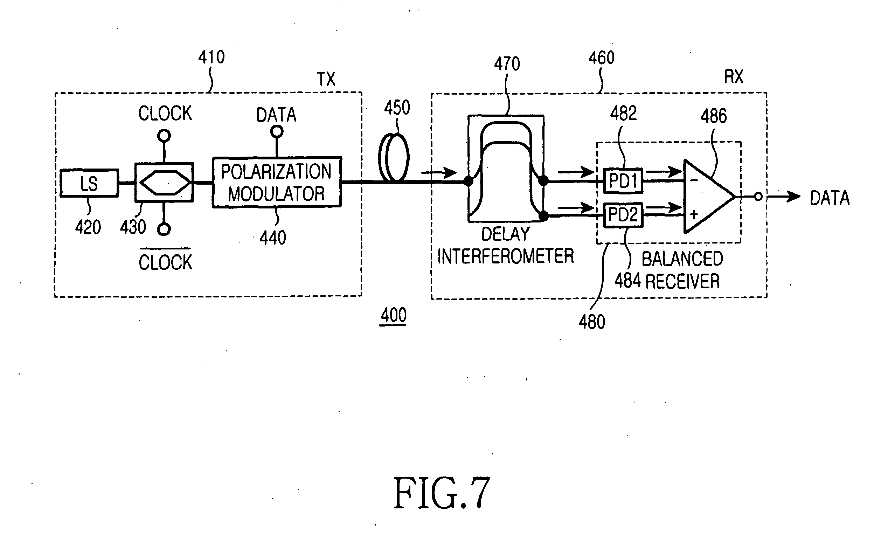

FIG. 7 shows an exemplary construction of an RZ (return-to-zero) differential polarization shift-keying optical transmission system according to a third preferred embodiment of the present invention. The optical transmission system 400 is identical to the optical transmission system 300 shown in FIG 6, except that the serial order of arrangement of a polarization modulator 440 and an auxiliary optical modulator 430 is reverse to that of the counterpart components in FIG 6. Therefore, repeated descriptions of the same components will be omitted. The optical transmission system 400 includes a transmitter unit 410 and a receiver unit 460, which are connected to each other by an optical fiber 450. The transmitter unit 410 includes a light source 420, the auxiliary optical modulator 430, and the polarization modulator 440 adapted to receive, as input, data and an optical pulse stream from the auxiliary optical modulator 430. The receiver unit 460 includes a 1-bit delay interferometer 470 and a balanced receiver 480. The balanced receiver 480 has first and second optical detectors 482, 484 and a differential amplifier 486.

The light source 420 outputs CW-mode light. The auxiliary optical modulator 430 uses an inputted clock signal or a half-frequency signal of a clock to generate, from the CW-mode light, an optical pulse stream which corresponds to a clock frequency. Using inputted data, the polarization modulator 440 modulates the optical pulse stream through polarization modulation and generates a polarization-modulated optical signal, which is then transmitted via the optical fiber 450.

As mentioned above, a differential polarization shift-keying optical transmission system according to the present invention uses a polarization modulation mode to implement a receiver unit that is composed of a 1-bit delay interferometer and a balanced receiver. The resulting device affords superior reception sensitivity and is less subject to the Kerr nonlinear effect of optical fibers. Advantageously, the need is eliminated for any additional active controller device. A long-distance optical transmission system can therefore be realized at a substantially reduced cost, and with remarkably improved system performance.

While the invention has been shown and described with reference to certain preferred embodiments thereof, it will be understood by those skilled in the art that various changes in form and details may be made therein without departing from the scope of the invention as defined by the appended claims.

## Claims

1. A differential polarization shift-keying optical transmission system (100; 300; 400) comprising:
a transmitter unit (110; 310; 410) configured to precode inputted data to form a precoded signal and to use the precoded signal to generate and output a polarization-modulated optical signal; and
a receiver unit (160; 360; 460) connected with the transmitter unit via an optical fiber (150; 350; 450) for optical transmission, said receiver unit including:
a delay interferometer (170; 370; 470) configured to split the optical signal from the transmitter unit into first and second split optical signals, generate a delayed optical signal by causing the second split optical signal to be delayed, generate a phase-inverted optical signal by inverting the phase of a part of the first split optical signal, generate a constructive-interferential optical signal by causing a part of the delayed optical signal to interfere with another part of the first split optical signal, and generate a destructive-interferential optical signal by causing another part of the delayed optical signal to interfere with the phase-inverted optical signal; and
a balanced receiver (210; 380; 480) configured to output a differential signal between the constructive-interferential optical signal and the destructive-interferential optical signal.

2. The differential polarization shift-keying optical transmission system as claimed in claim 1, wherein the transmitter unit (110) includes:
a light source (120) configured to output CW-mode light;
a precoder (130) configured to perform the precoding of the inputted data, said precoded signal being a precoded electrical signal; and
a polarization modulator (140) configured to use the precoded signal to modulate, through polarization modulation, the light from the light source in performing the generating and outputting of the polarization-modulated optical signal.

3. The differential polarization shift-keying optical transmission system as claimed in claim 1 or 2, wherein the transmitter unit (310) includes:
a light source (320) configured to output CW-mode light;
a polarization modulator (330) configured to use the inputted data to modulate, through polarization modulation, the light from the light source in performing the generating and outputting of the polarization-modulated optical signal; and
an auxiliary optical modulator (340) configured to generate an optical pulse stream which has a frequency, load into the optical pulse stream the outputted polarization-modulated optical signal, and transmit the optical pulse stream via the optical fiber (350).

4. The differential polarization shift-keying optical transmission system as claimed in one of claims 1 to 3, wherein the transmitter unit (410) includes:
a light source (420) configured to generate CW-mode light;
an auxiliary optical modulator (430) configured to generate from the CW-mode light an optical pulse stream, which has a frequency; and
a polarization modulator (440) configured to use the inputted data to modulate, through polarization modulation, the optical pulse stream in performing the generating and outputting of the polarization-modulated optical signal, said outputting occurring via the optical fiber (450).

5. The differential polarization shift-keying optical transmission system as claimed in one of claims 1 to 4, wherein the delay interferometer (170; 370; 470) is a 1-bit delay interferometer.

6. The differential polarization shift-keying optical transmission system as claimed in claim 5, wherein the 1-bit delay interferometer (170; 370; 470) includes a beam splitter configured to perform the split, through intensity split, and output said first and second split optical signals via first and second output ports of the beam splitter, said optical signal being inputted to a first input port of the beam splitter, said first input port being in optical connection with the optical fiber.

7. The differential polarization shift-keying optical transmission system as claimed in claim 6, wherein the 1-bit delay interferometer (170; 370; 470) further includes first and second delay lines which are in connection with the first and second output ports, respectively, and are configured to generate said delayed optical signal by causing the second split optical signal to be more delayed than the first split optical signal by 1 bit.

8. The differential polarization shift-keying optical transmission system as claimed in claim 7, wherein the 1-bit delay interferometer (170; 370; 470) further includes an optical coupler configured for the generating of the phase-inverted, constructive-interferential and destructive-interferential optical signals, said first split optical signal being inputted to an input port of the optical coupler, said input port of the optical coupler being in connection with the first delay line, said constructive-interferential and destructive-interferential optical signals being outputted, respectively, via first and second output ports of the optical coupler.

9. The differential polarization shift-keying optical transmission system as claimed in claim 8, wherein the balanced receiver (210; 380; 480) includes a first optical detector (212; 382; 482) which is in optical connection with the first output port of the optical coupler and is configured to output a first detection signal, which is obtained through photoelectric conversion of the constructive-interferential optical signal.

10. The differential polarization shift-keying optical transmission system as claimed in claim 9, wherein the balanced receiver (210; 386; 480) further includes a second optical detector (214; 384; 484) which is in optical connection with the second output port of the optical coupler and is configured to output a second detection signal, which is obtained through photoelectric conversion of the destructive-interferential optical signal.

11. The differential polarization shift-keying optical transmission system as claimed in claim 10, wherein the balanced receiver (210; 380; 480) further includes a differential amplifier (216; 386; 486) which includes a (-) input terminal connected with the first optical detector (212; 382; 482), a (+) input terminal connected with the second optical detector (214; 384; 484), and an output terminal and is configured to output, via the output terminal, the differential signal corresponding to a difference between the first and second detection signals, which are inputted to the (-) and (+) input terminals, respectively.

## Patentansprüche

1. Optisches Übertragungssystem (100; 300; 400) mit Polarisationsdifferenz-Umtastung (differential polarization shift-keying), das umfasst:
eine Senderreinheit (110; 310; 410), die so konfiguriert ist, dass sie eingegebene Daten vorcodiert, um ein vorcodiertes Signal auszugeben, und das vorcodierte Signal verwendet, um ein polarisationsmoduliertes optisches Signal zu erzeugen und auszugeben; und
eine Empfängereinheit (160; 360; 460), die mit der Senderreinheit über eine optische Faser (150; 350; 450) zur optischen Übertragung verbunden ist, wobei die Empfängereinheit umfasst:
ein Verzögerungs-Interferometer (170; 370; 470), das so konfiguriert ist, dass es das optische Signal von dem Sender in ein erstes und ein zweites geteiltes optisches Signal teilt, ein verzögertes optisches Signal erzeugt, indem es bewirkt, dass das zweite geteilte optische Signal verzögert wird, ein phaseninvertiertes optisches Signal erzeugt, indem es die Phase eines Teils des ersten geteilten optischen Signals invertiert, ein optisches Signal mit konstruktiver Interferenz erzeugt, indem es bewirkt, dass es zu Interdifferenz eines Teils des verzögerten optischen Signals mit einem anderen Teil des ersten geteilten optischen Signals kommt, und ein optisches Signal mit destruktiver Interferenz erzeugt, indem es bewirkt, dass es zu Interferenz eines anderen Teils des verzögerten optischen Signals mit dem phaseninvertierten optischen Signal kommt; und
einen symmetrischen Empfänger (210; 380; 480), der so konfiguriert ist, dass er ein Differenzsignal zwischen dem optischen Signal mit konstruktiver Interferenz und dem optischen Signal mit destruktiver Interferenz ausgibt.

2. Optisches Übertragungssystem mit Polarisationsdifferenz-Umtastung nach Anspruch 1, wobei die Sendereinheit (110) enthält:
eine Lichtquelle (120), die so konfiguriert ist, dass sie CW-Moden-Licht ausgibt; einen Vorcodierer (130), der so konfiguriert ist, dass er das Vorcodieren der eingegebenen Daten durchführt, wobei das vorcodierte Signal ein vorcodiertes elektrisches Signal ist; und
einen Polarisationsmodulator (140), der so konfiguriert ist, dass er das vorcodierte Signal verwendet, um durch Polarisationsmodulation das Licht von der Lichtquelle beim Durchführen des Erzeugens und Ausgebens des polarisationsmodulierten optischen Signals zu modulieren.

3. Optisches Übertragungssystem mit Polarisationsdifferenz-Umtastung nach Anspruch 1 oder 2, wobei die Sendereinheit (310) enthält:
eine Lichtquelle (320), die so konfiguriert ist, dass sie CW-Moden-Licht ausgibt;
einen Polarisationsmodulator (330), der so konfiguriert ist, dass er die eingegebenen Daten verwendet, um durch Polarisationsmodulation das Licht von der Lichtquelle beim Durchführen des Erzeugens und Ausgebens des polarisationsmodulierten optischen Signals zu modulieren; und
einen zusätzlichen optischen Modulator (340), der so konfiguriert ist, dass er einen optischen Impulsstrom erzeugt, der eine Frequenz hat, das ausgegebene polarisationsmodulierte optische Signal in den optischen Impulsstrom lädt und den optischen Impulsstrom über die optische Faser (350) sendet.

4. Optisches Übertragungssystem mit Polarisationsdifferenz-Umtastung nach einem der Ansprüche 1 bis 3, wobei der Sender (410) enthält:
eine Lichtquelle (420), die so konfiguriert ist, dass sie CW-Moden-Licht erzeugt;
einen zusätzlichen optischen Modulator (430), der so konfiguriert ist, dass er aus dem CW-Moden-Licht einen optischen Impulsstrom erzeugt, der eine Frequenz hat; und
einen Polarisationsmodulator (440), der so konfiguriert ist, dass er die eingegebenen Daten verwendet, um durch Polarisationsmodulation den optischen Impulsstrom beim Durchführen des Erzeugens und Ausgebens des polarisationsmodulierten optischen Signals zu modulieren, wobei das Ausgeben über die optische Faser (440) stattfindet.

5. Optisches Übertragungssystem mit Polarisationsdifferenz-Umtastung nach einem der Ansprüche 1 bis 4, wobei das Verzögerungs-Interferometer (170; 370; 470) ein 1-Bit-Verzögerungs-Interferometer ist.

6. Optisches Übertragungssystem mit Polarisationsdifferenz-Umtastung nach Anspruch 5, wobei das 1-Bit-Verzögerungs-Interferometer (170; 370; 470) einen Strahlteiler enthält, der so konfiguriert ist, dass er die Teilung durch Intensitätsteilung durchführt und das erste sowie das zweite optische Teilsignal über einen ersten und einen zweiten Ausgangs-Port des Strahlteilers ausgibt, wobei das optische Signal in einen ersten Eingangs-Port des Strahlteilers eingegeben wird und der erste Eingangs-Port in optischer Verbindung mit der optischen Faser steht.

7. Optisches Übertragungssystem mit Polarisationsdifferenz-Umtastung nach Anspruch 6, wobei das 1-Bit-Verzögerungsinterferometer (170; 370; 470) eine erste und eine zweite Verzögerungsleitung enthält, die jeweils in Verbindung mit dem ersten und dem zweiten Ausgangs-Port stehen und so konfiguriert sind, dass sie das verzögerte optische Signal erzeugen, indem sie bewirken, dass das zweite geteilte optische Signal um 1 Bit mehr verzögert wird als das erste geteilte optische Signal.

8. Optisches Übertragungssystem mit Polarisationsdifferenz-Umtastung nach Anspruch 7, wobei das 1-Bit-Verzögerungs-Interferometer (170; 370; 470) des Weiteren einen optischen Koppler enthält, der zum Erzeugen der phaseninvertierten optischen Signale mit konstruktiver Interferenz und destruktiver Interferenz konfiguriert ist, das erste optische Teilsignal in einen Eingangs-Port des optischen Kopplers eingegeben wird, der Eingangs-Port des optischen Kopplers mit der ersten Verzögerungsleitung in Verbindung steht, und das optische Signal mit konstruktiver Interferenz sowie das optische Signal mit destruktiver Interferenz über einen ersten bzw. einen zweiten Ausgangs-Port des optischen Kopplers ausgegeben werden.

9. Optisches Übertragungssystem mit Polarisationsdifferenz-Umtastung nach Anspruch 8, wobei der symmetrische Empfänger (210; 380; 480) einen ersten optischen Detektor (212; 382; 482) enthält, der in optischer Verbindung mit dem ersten Ausgangs-Port des optischen Kopplers steht und so konfiguriert ist, dass er ein erstes Erfassungssignal ausgibt, das über fotoelektrische Umwandlung des optischen Signals mit konstruktiver Interferenz gewonnen wird.

10. Optisches Übertragungssystem mit Polarisationsdifferenz-Umtastung nach Anspruch 9, wobei der symmetrische Empfänger (210; 386; 480) einen zweiten optischen Detektor (214; 384; 484) enthält, der in optischer Verbindung mit dem zweiten Ausgangs-Port des optischen Kopplers steht und so konfiguriert ist, dass er ein zweites Erfassungssignal ausgibt, das durch fotoelektrische Umwandlung des optischen Signals mit destruktiver Interferenz gewonnen wird.

11. Optisches Übertragungssystem mit Polarisationsdifferenz-Umtastung nach Anspruch 10, wobei der symmetrische Empfänger (210; 380; 480) des Weiteren einen Differenzverstärker (216; 386; 486) enthält, der einen (-)-Eingangsanschluss, der mit dem ersten optischen Detektor (212; 382; 482) verbunden ist, einen (+)-Eingangsanschluss, der mit dem zweiten optischen Detektor (214; 384; 484) verbunden ist, und einen Ausgangsanschluss enthält und so konfiguriert ist, dass er über den Ausgangsanschluss das Differenzsignal ausgibt, das einer Differenz zwischen dem ersten und dem zweiten Erfassungssignal entspricht, die über den (-)- bzw. (+)-Eingangsanschluss eingegeben werden.

## Revendications

1. Système de transmission optique à déplacement de polarisation différentielle (100 ; 300 ; 400), comprenant:
une unité émettrice (110 ; 310 ; 410) configurée pour pré-coder des données entrées afin de former un signal pré-codé et utiliser le signal pré-codé afin de générer et de sortir un signal optique modulé en polarisation ; et
une unité réceptrice (160; 360 ; 460) connectée à l'unité émettrice via une fibre optique (150 ; 350 ; 450) pour une transmission optique, ladite unité réceptrice comprenant:
un interféromètre de retard (170; 370; 470) configuré pour séparer le signal optique provenant de l'unité émettrice en des premier et deuxième signaux optiques séparés, générer un signal optique différé en amenant le deuxième signal optique séparé à être-différé, générer un signal optique inversé en phase en inversant la phase d'une partie du premier signal optique séparé, générer un signal optique d'interférence constructrice en amenant une partie du signal optique différé à interférer avec une autre partie du premier signal optique séparé, et générer un signal optique d'interférence destructrice en amenant une autre partie du signal optique différé à interférer avec le signal optique inversé en phase ; et
un récepteur équilibré (210; 380; 480) configuré pour sortir un signal différentiel entre le signal optique d'interférence constructrice et le signal optique d'interférence destructrice.

2. Système de transmission optique à déplacement de polarisation différentielle selon la revendication 1, dans lequel l'unité émettrice (110) comprend :
une source de lumière (120) configurée pour sortir une lumière en mode CW ;
un dispositif de pré-codage (130) configuré pour effectuer le pré-codage des données entrées, ledit signal pré-codé étant un signal électrique pré-codé ; et
un modulateur de polarisation (140) configuré pour utiliser le signal pré-codé pour moduler, par le biais d'une modulation de polarisation, la lumière provenant de la source de lumière lors de la réalisation de la génération et de la sortie du signal optique modulé en polarisation.

3. Système de transmission optique à déplacement de polarisation différentielle selon la revendication 1 ou 2, dans lequel l'unité émettrice (310) comprend :
une source de lumière (320) configurée pour sortir une lumière en mode CW ;
un modulateur de polarisation (330) configuré pour utiliser les données entrées pour moduler, par le biais d'une modulation de polarisation, la lumière provenant de la source de lumière lors de la réalisation de la génération et de la sortie du signal optique modulé en polarisation ; et
un modulateur optique auxiliaire (340) configuré pour générer un train d'impulsions optiques qui a une fréquence, charger dans le train d'impulsions optiques le signal optique modulé en polarisation sorti, et transmettre le train d'impulsions optiques via la fibre optique (350).

4. Système de transmission optique à déplacement de polarisation différentielle selon l'une quelconque des revendications 1 à 3, dans lequel l'unité émettrice (410) comprend:
une source de lumière (420) configurée pour générer une lumière en mode CW ;
un modulateur optique auxiliaire (430) configuré pour générer à partir de la lumière en mode CW un train d'impulsion optiques, qui a une fréquence ; et
un modulateur de polarisation (440) configuré pour utiliser les données entrées pour moduler, par le biais d'une modulation de polarisation, le train d'impulsions optiques lors de la réalisation de la génération et de la sortie du signal optique modulé en polarisation, ladite sortie survenant via la fibre optique (450).

5. Système de transmission optique à déplacement de polarisation différentielle selon l'une quelconque des revendications 1 à 4, dans lequel l'interféromètre de retard (170 ; 370 ; 470) est un interféromètre de retard de 1 bit.

6. Système de transmission optique à déplacement de polarisation différentielle selon la revendication 5, dans lequel l'interféromètre de retard de 1 bit (170 ; 370 ; 470) comprend un séparateur de faisceau configuré pour réaliser la séparation, par le biais d'une séparation d'intensité, et sortir lesdits premier et deuxième signaux optiques séparés via des premier et deuxième ports de sortie du séparateur de faisceau, ledit signal optique étant entré dans un premier port d'entrée du séparateur de faisceau, ledit premier port d'entrée étant en connexion optique avec la fibre optique.

7. Système de transmission optique à déplacement de polarisation différentielle selon la revendication 6, dans lequel l'interféromètre de retard de 1 bit (170 ; 370 ; 470) comprend en outre des première et deuxième lignes de retard qui sont en connexion avec les premier et deuxième ports de sortie, respectivement, et sont configurées pour générer ledit signal optique différé en amenant le deuxième signal optique séparé à être plus différé que le premier signal optique séparé de 1 bit.

8. Système de transmission optique à déplacement de polarisation différentielle selon la revendication 7, dans lequel l'interféromètre de retard de 1 bit (170 ; 370 ; 470) comprend en outre un coupleur optique configuré pour la génération des signaux optiques inversés en phase, d'interférence constructrice et d'interférence destructrice, ledit premier signal optique séparé étant entré dans un port d'entrée du coupleur optique, ledit port d'entrée du coupleur optique étant en connexion avec la première ligne de retard, lesdits signaux optiques d'interférence constructrice et d'interférence destructrice étant sortis, respectivement, via les premier et deuxième ports de sortie du coupleur optique.

9. Système de transmission optique à déplacement de polarisation différentielle selon la revendication 8, dans lequel le récepteur équilibré (210 ; 380 ; 480) comprend un premier détecteur optique (212 ; 382 ; 482) qui est en connexion optique avec le premier port de sortie du coupleur optique et est configuré pour sortir un premier signal de détection, qui est obtenu par le biais d'une conversion photoélectrique du signal optique d'interférence constructrice.

10. Système de transmission optique à déplacement de polarisation différentielle selon la revendication 9, dans lequel le récepteur équilibré (210 ; 380; 480) comprend en outre un deuxième détecteur optique (214; 384 ; 484) qui est en connexion optique avec le deuxième port de sortie du coupleur optique et est configuré pour sortir un deuxième signal de détection, qui est obtenu par le biais d'une conversion photoélectrique du signal optique d'interférence destructrice.

11. Système de transmission optique à déplacement de polarisation différentielle selon la revendication 10, dans lequel le récepteur équilibré (210 ; 380 ; 480) comprend en outre un amplificateur différentiel (216 ; 386 ; 486) qui comprend une borne d'entrée (-) connectée au premier détecteur optique (212 ; 382 ; 482), une borne d'entrée (+) connectée au deuxième détecteur optique (214 ; 384 ; 484), et une borne de sortie, et est configuré pour sortir, via la borne de sortie, le signal différentiel correspondant à une différence entre les premier et deuxième signaux de détection, qui sont entrés aux bornes d'entrée (-) et (+), respectivement.
